# EUROPEAN PATENT APPLICATION

(11) **EP 3 470 734 A1**
(43) Date of publication of application: **17.04.2019**
(21) Application number: 18195141.9
(22) Date of filing: 18.09.2018
(51) Int. Cl.: F23D 14/54, B01D 35/143, F16K 37/00, F23D 14/82

(54) **FLOW INDICATOR FOR GAS FLOW SAFETY DEVICE**

(30) Priority: 11.10.2017 US 201715729938
(71) Applicant: The Esab Group, Inc., Florence, South Carolina 29506 (US)
(72) Inventor: Nguyen, Nhyanh, Texas, TX Texas 75033 (US); Henderson, John, Texas, TX Texas 76210 (US)
(74) Representative: Murgitroyd & Company

(57) **Abstract**

A gas flow safety device, such as a flashback arrestor, with flow indication includes a main body (100) and a safety element (220). The main body (100) has a flow capacity and is configured to direct a flow of gas from an inlet (240) to an outlet (250). The safety element (220) is disposed within the main body (100) and prevents at least one of flashbacks and reverse flows of gas. The flashback arrestor may also include at least one of: an indicator assembly (180) that automatically provides an indication when the flow capacity of the main body (100) diminishes by a predetermined amount; and a movable internal mechanism (150) that causes the apparatus to provide an indication when the flow capacity of the main body (100) diminishes by the predetermined amount.

## Description

### TECHNICAL FIELD

The present disclosure is directed towards gas flow safety devices, such as flashback arrestors, for operations utilizing a flow of gas, such as oxy-fuel welding and cutting.

### BACKGROUND

Gas flow safety devices, such as filtration devices and flashback arrestors often provide some added safety measure during gas operations. Filtration devices may filter contaminants and/or prevent a reverse flow of gases (i.e., with a check valve). Flashback arrestors with check valves are gas flow safety devices that prevent a flashback and a reverse flow of gas from traveling upstream through gas lines or equipment. Consequently, flashback arrestors prevent damage and/or catastrophic failures from occurring during operations utilizing a gas flow, such as oxy-fuel welding and cutting. To provide this functionality, flashback arrestors and filtration devices typically include, among other components, one or more filters. By design, debris is caught in the filter and, thus, the debris decreases the flow capacity of the gas safety device over time. Consequently, gas flow safety devices must be periodically replaced or serviced.

Often, servicing includes replacing or cleaning a filter. For example, flashback arrestors often include a filter that is upstream of a flame arrestor (or other such element) and the flashback arrestor will include a manual that specifies how often this filter should be cleaned. Thus, an end-user must remember when their device is due for service.

Additionally or alternatively, an end-user can test the flow rate of gas passing through a gas flow safety device at regular intervals. Unfortunately, this testing is often difficult (i.e., the testing may require specific equipment and/or a qualified/authorized person) and, thus, may often may be neglected. In lieu of this testing, an end-user may try to estimate the flow capacity of his or her gas flow safety device (i.e., a flashback arrestor) by measuring the pressure differential between the entrance and the exit of their gas flow safety device. The pressure differential can often be compared to a reference chart included in a manual or other such literature (e.g., literature from a manufacturer, agency, etc.) to determine if a flashback arrestor is operating with sufficient flow capacity. Either way, the end-user must remove their gas flow safety device from its in-line position to perform the testing. Consequently, in some instances, an end-user may simply try to compensate for a drop in flow by increasing the upstream pressure. Unfortunately, increasing the pressure may create other safety issues in the system. In view of the aforementioned issues, a gas flow safety device, such as a flashback arrestor, that provides an indication of flow capacity while remaining in-line is desirable.

### SUMMARY

The present disclosure is directed towards a flow indicator for a gas flow safety device. According to one embodiment, an apparatus includes a main body, a safety element, and an indicator assembly. The main body has a flow capacity and is configured to direct a flow of gas from an inlet to an outlet. The safety element prevents flashbacks and is disposed within the main body. The indicator assembly automatically provides an indication when flow capacity of the main body diminishes by a predetermined amount. Consequently, and advantageously, the apparatus eliminates the need for an end-user to remember a specific date, test the flow and/or pressure differential, and/or manage any other inconveniences typically associated with servicing and replacing a gas flow safety device, such as a flashback arrestor.

In at least some of these embodiments, the indication is a visual indication and, thus, is easily discernable by a user during gas-flow operations, even if the operations are being performed in a noisy environment. Additionally or alternatively, the indicator assembly may be disposed around and movable along an external surface of the main body. Consequently, the indicator assembly may be visible from most, if not all, external user positions relative to the apparatus.

Still further, in some embodiments of the aforementioned apparatus, the indicator assembly includes an indicator band that provides the indication when uncovered and a collar that covers the indicator band until the flow capacity of the main body diminishes by the predetermined amount. In some of these embodiments, the collar is biased to an indicating position that uncovers the indicator band and the apparatus also includes a plurality of actuatable elements, wherein the actuatable elements lock the collar in a non-indicating position that covers the indicator band until the flow capacity of the main body diminishes by the predetermined amount. Moreover, some embodiments with the plurality of actuatable elements include an internal mechanism that moves into alignment with the plurality of actuatable elements to actuate the actuatable elements and unlock the collar when the flow capacity of the main body diminishes by the predetermined amount. Advantageously, each of these components is a relatively inexpensive mechanical component that can operate over a relatively long life span in adverse conditions, or at least for the serviceable life of a gas flow safety device, such as a flashback arrestor.

Additionally, in some embodiments including an internal mechanism, the actuatable elements are ball bearings and the internal mechanism is slidably mounted within the main body so that the internal mechanism can slide from a first position to a second position to actuate the ball bearings. The ball bearings engage the main body and the collar when the internal mechanism is in the first position and the ball bearings engage the main body and the internal mechanism when the internal mechanism is in the second position. In some of these embodiments, the internal mechanism moves to the second position when backpressure acting on the internal mechanism creates a load that overcomes a force exerted by a biasing member acting on the internal mechanism. Consequently, the internal mechanism is actuated when in-line with a gas operation (i.e., when installed on a hose, torch, and/or other such gas equipment) and need not be removed to perform testing. Moreover, due to the aforementioned arrangement, only the internal mechanism or the collar can move at one time. This may ensure that the gas flow safety device automatically and accurately provides the indication without providing false positives prior to the flow capacity diminishing by the predetermined amount.

In yet other embodiments of the above apparatus, the apparatus provides the indication by automatically moving from a non-indicating position to an indicating position. For example, the apparatus may include an internal mechanism that is movable between a non-actuated position and an actuated position and a plurality of actuatable elements that are movable between locked positions and an unlocked positions. When the flow capacity of the main body diminishes by the predetermined amount, the internal mechanism moves to the actuated position to allow the actuatable elements to move to the unlocked positions, and moving the actuatable elements to the unlocked positions allows the indicator assembly to move to the indicating position.

According to another embodiment, a flow indicator for a gas flow safety device is embodied as an apparatus that includes a main body, a safety element, and a movable internal mechanism. The main body has a flow capacity and is configured to direct a flow of gas from an inlet to an outlet. The safety element prevents the flow of gas from reversing and is disposed within the main body. The movable internal mechanism causes the apparatus to provide an indication when the flow capacity of the main body diminishes by a predetermined amount. This apparatus also eliminates the need for an end-user to remember a specific date, test the flow and/or pressure differential, and/or manage any other inconveniences typically associated with servicing and replacing a gas flow safety device, such as a flashback arrestor. Again, in some of these embodiments, the indication is a visual indication and, thus, is easily discernable by a user during gas-flow operations, even if the operations are being performed in a noisy environment.

In other embodiments, the apparatus also includes a plurality of actuatable elements and the internal mechanism moves into alignment with the plurality of actuatable elements to provide the indication when the flow capacity of the main body diminishes by the predetermined amount. In some of these embodiments, the internal mechanism is slidably mounted within the main body and slides from a first position to a second position to move into alignment with the plurality of actuatable elements. Moreover, in some embodiments, the internal mechanism moves to the second position when backpressure acting on the internal mechanism creates a load that overcomes a force exerted by a biasing member acting on the internal mechanism. Consequently, in these embodiments, the internal mechanism is again actuated when in-line with a gas operation (i.e., when installed on a hose, torch, and/or other such gas equipment) and need not be removed to perform testing. Moreover, due to the aforementioned arrangement, only the internal mechanism or the collar can move at one time. This may ensure that the gas flow safety device automatically and accurately provides the indication without providing false positives prior to the flow capacity diminishing by the predetermined amount.

In still other embodiments including the plurality of actuatable elements, the apparatus also includes an external indicator assembly that automatically provides the indication on an external surface of the main body, wherein moving the internal mechanism into alignment with the plurality of actuatable elements causes the external indicator assembly to provide the indication. Consequently, the indicator assembly may be visible from most, if not all, external user positions relative to the apparatus. For example, the external indicator assembly may include an indicator band that provides the indication when uncovered and a collar that covers the indicator band until the flow capacity of the main body diminishes by the predetermined amount. In some of these embodiments, the plurality of actuatable elements are movable between locked positions and an unlocked positions and upon diminishment of the flow capacity of the main body by the predetermined amount, the internal mechanism moves to an actuated position to allow the actuatable elements to move to the unlocked positions. Moving the actuatable elements to the unlocked positions allows the external indicator assembly to move to an indicating position to provide the indication.

In yet another embodiment, a flow indicator for a gas safety device is embodied as an indicator assembly for a gas flow safety device includes an indicator band and a collar. The indicator band is mounted around an external surface of the gas flow safety device and the collar is mounted around the external surface and selectively positionable over the indicator band. The collar is configured to hide the indicator band when the gas flow safety device is operating with a flow capacity above a predetermined threshold and automatically expose the indicator band when the flow capacity is below the predetermined threshold. In some of these embodiments, the collar is a spring-loaded collar. Advantageously, the indicator assembly may eliminate the need for an end-user to remember a specific date, test the flow and/or pressure differential, and/or manage any other inconveniences typically associated with servicing and replacing a gas flow safety device. Moreover, the indicator assembly may provide the indication while in-line so that an end-user need not remove the gas safety device from any other equipment to determine whether servicing or replacement is needed.

### BRIEF DESCRIPTION OF THE DRAWINGS

FIG. 1 is a side perspective view of a flashback arrestor with a flow indicator, according to an example embodiment of the present disclosure.
FIG. 2 is an exploded perspective view of the flashback arrestor of FIG. 1.
FIG. 3 is a side sectional view of the flashback arrestor of FIG. 1, prior to actuation of the flow indicator, taken along line A-A of FIG. 1.
FIG. 4 is an exploded view of the sectional view of FIG. 3.
FIG. 5 is a front sectional view of the flashback arrestor of FIG. 1 taken along line B-B of FIG. 1.
FIG. 6 depicts the side sectional view of FIG. 3 subsequent to actuation of the flow indicator.
FIG. 7 is a side sectional view of flashback arrestor with a flow indicator, prior to actuation of the flow indicator, according to another example embodiment of the present disclosure.
FIG. 8 is an exploded view of the sectional view of FIG. 7.
FIG. 9A is a side sectional view of flashback arrestor with a flow indicator, subsequent to a partial actuation of the flow indicator, according to another example embodiment of the present disclosure.
FIG. 9B is a close-up view of inset A from FIG. 9A.
FIG. 10A is a side sectional view of the flashback arrestor of FIG. 9A, subsequent to a full actuation of the flow indicator.
FIG. 10B is a close-up view of inset B from FIG. 10A.

Like numerals identify like components throughout the figures.

### DETAILED DESCRIPTION

A gas flow safety device with a flow indicator is described and presented herein. For simplicity, the flow indicator is shown and described herein in connection with a flashback arrestor with a check valve (i.e., a device that can prevent flashbacks and reverse flow); however, it is to be understood that the flow indicator may also be utilized with, incorporated into, or installed on any other gas safety devices utilizing a filter, such as filtration devices. The flow indicator presented herein automatically indicates when a gas flow safety device, such as a flashback arrestor, has a diminished flow capacity and, thus, automatically indicates when the gas flow safety device should be serviced or replaced. In order to automatically indicate that the gas flow safety device has a diminished flow capacity, the gas flow safety device includes an internal mechanism that is actuated when backpressure within the gas flow safety device exceeds a pressure threshold. In particular, the internal mechanism includes a filter (or any other element that can capture debris) and when the filter collects enough debris, backpressure against the filter actuates the internal mechanism. However, although the flow indicator may be actuated by back pressure, the flow indicator provides an indication of diminished flow capacity, not back pressure (as is implied by the name of the indicator). Moreover, the flow indicator does not close a flow path extending through the gas flow safety device; instead, the flow indicator provides an indication when debris is clogging the flow path and limiting the flow rate of gas passing through the device.

More specifically, actuation of the internal mechanism causes an external collar to expose an external indicator band that is covered by the external collar prior to actuation of the internal mechanism. Put another way, the indicator band is initially covered or hidden and is automatically exposed or revealed when the flow capacity of the gas flow safety device diminishes or decreases a predetermined amount. Consequently, the gas flow safety device described and presented herein provides an automatic indication of diminished flow capacity, thereby eliminating the need for an end-user to remember a specific date, test the flow and/or pressure differential, and/or manage any other inconveniences typically associated with servicing and replacing a gas flow safety device, such as a flashback arrestor. Moreover, the gas flow safety device described and presented herein provides this indication in-line (i.e., while connected to any gas equipment, such as hoses, tanks, torches, etc.) and without closing the device (i.e., without shutting off a flow path through the device). Consequently, an end-user need not remove the gas safety device from any other equipment to determine whether servicing or replacement is needed and an end-user may still utilize the device for low-flow operations if desired.

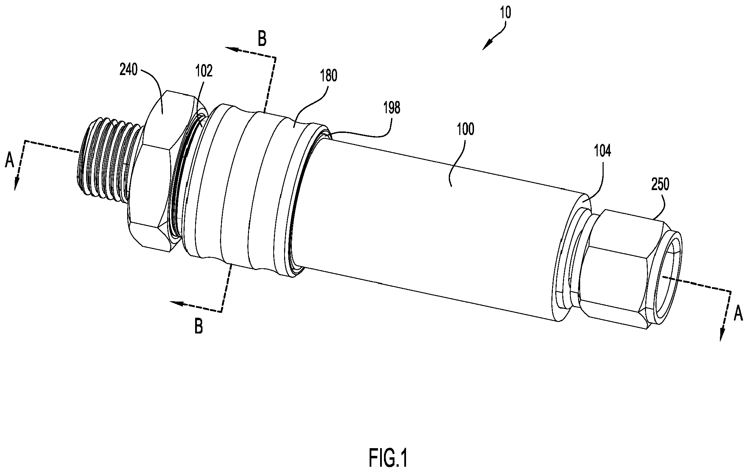

FIGs. 1-3 depict a side perspective view, an exploded perspective view, and a side sectional view of an example embodiment of a gas flow safety device with flow indication 10. The gas flow safety device with flow indication 10 is a flashback arrestor and, thus, is also referred to herein simply as flashback arrestor 10 or even device 10 or apparatus 10; however, as mentioned above, the description of the flashback arrestor 10 is to be understood to apply to a variety of gas flow safety devices, such as filtration devices. That being said, the flashback arrestor 10 includes a main body 100, an internal mechanism 150, an indicator assembly 180, a plurality of actuatable elements 200, a safety element 220 (e.g., a sintered filter bushing), an inlet assembly 240, and an outlet assembly 250. In the depicted embodiment, the inlet assembly 240 includes a check valve 242 that prevents a reverse flow of gas and the safety element 220 is a flame arrestor (i.e., a sintered filter bushing) with gaskets 222 at its downstream and upstream ends. The flame arrestor 220 extinguishes flames from a flashback event and the gaskets 222 help seal the surfaces of the flame arrestor 220. However, in other embodiments, the safety element 220 may be or include any safety elements now known or developed hereafter (i.e., any flame arrestor now known or developed hereafter) so that, collectively, the check valve 242 and the safety element 220 can prevent a flashback or reverse flow of gas (and, thus, satisfy the industry standards for a flashback arrestor). Consequently, the check valve 242 may also be referred to as a safety element.

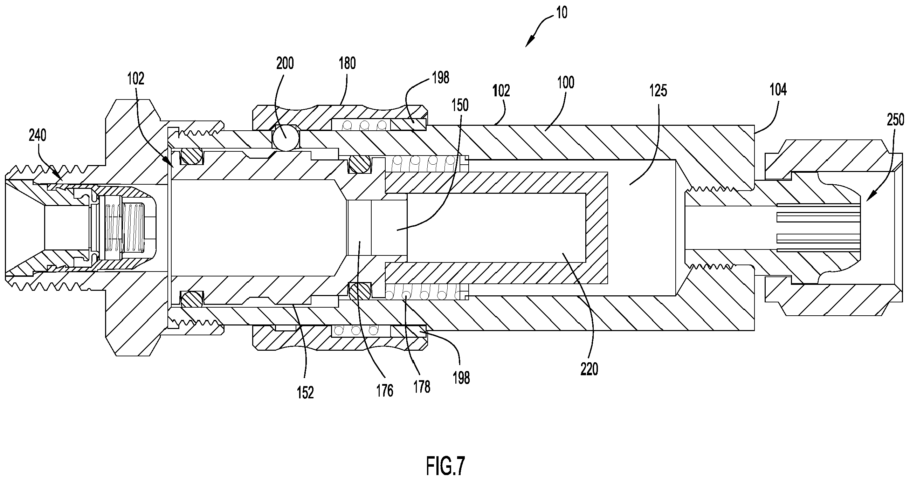

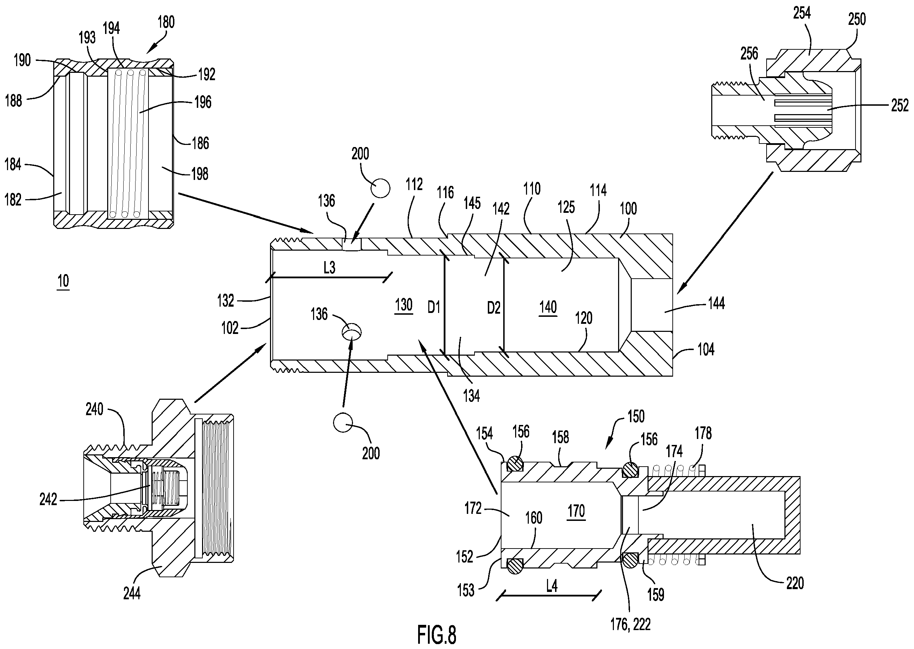

The main body 100 includes an external or outer surface 110 and inner or interior surface 120 that defines an interior cavity 125. The internal mechanism 150 and safety element 220 (which, in at least some embodiments, may be considered part of the internal mechanism 150, as is explained in further detail below in connection with FIGs. 7 and 8) are housed within the internal cavity 125 while the indicator assembly 180 is disposed or mounted on (e.g., around) the external surface 110 of the main body 100. The actuatable elements 200 are positioned at least partially within the main body 100 and can selectively engage the internal mechanism 150 and/or the indicator assembly 180. Meanwhile, the inlet assembly 240 (which may also be referred to as inlet 240) is positioned at and coupled to the first or upstream end 102 of the main body 100 while the outlet assembly 250 (which may also be referred to as outlet 250) is positioned at and coupled to the second or downstream end 104 of the main body 100.

Although the inlet assembly 240 and outlet assembly 250 are shown as being distinct parts or assemblies with respect to the main body 100, the inlet assembly 240 and/or outlet assembly 250 can be part of (i.e., formed integrally with) the main body 100. Moreover, in other embodiments, the main body 100, inlet assembly 240, and/or outlet assembly 250 need not be aligned along the same axis and, instead, may include, define or connect at angles or turns. For example, the inlet assembly 240 and outlet assembly 250 may be aligned on the same central axis or include perpendicular central axes. Regardless of the orientation or arrangement of the inlet assembly 240 and outlet assembly 250, generally, the main body 100 includes one or more pathways (i.e., flow paths) that allow gas received from the inlet assembly 240 to flow to the outlet assembly 250. Still further, although the flashback arrestor 10 is depicted as a stand-alone device, the main body 100 can be included or incorporated into any desirable equipment so that the flashback arrestor presented and described herein is "built-in" to a tool or equipment.

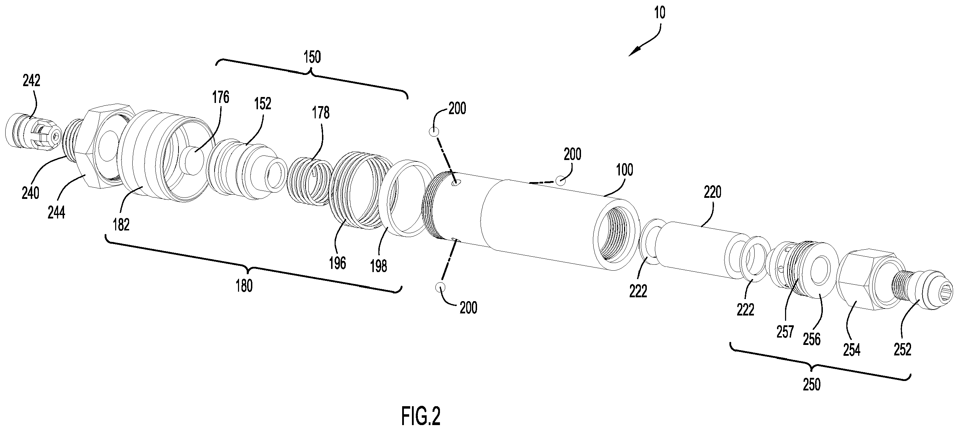

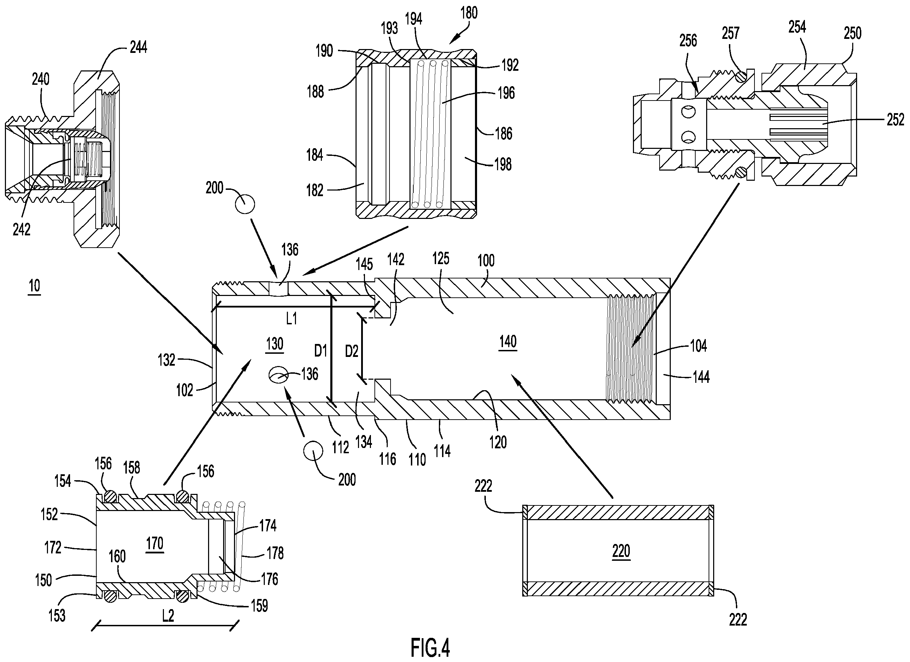

Moreover, the depicted inlet assembly 240 and outlet assembly 250 are simply examples and, in other embodiments, inlet assembly 240 and/or outlet assembly 250 may be replaced with or modified to provide any desirable inlet or outlet assembly that allows the flashback arrestor 10 to be connected to or incorporated into gas equipment (i.e., hoses) with a sealed connection. For example, the inlet assembly 240 and/or outlet assembly 250 may be replaced with any inlet or outlet that allows the flashback regulator 10 to connect to hoses, torches, regulators, gas supplies (i.e., oxygen), fuel, etc., as needed. That being said, for completeness, the depicted inlet assembly 240 and outlet assembly 250 are now briefly described (by comparison, the internal mechanism 150 and indicator assembly 180 are described in detail below in connection with FIGs. 4-8). Reference is also made to FIGs. 2, 4, and 8, which depict two embodiments of the inlet assembly 240 and the outlet assembly 250, for the brief descriptions of the inlet assembly 240 and the outlet assembly 250.

First, in the embodiments depicted in the Figures, the inlet assembly 240 includes a check valve 242 and a retainer 244. The check valve 242 (also referred to as non-return valve 242) is a safety feature to help stop reverse flow (as mentioned, the check valve 242 and safety element 220 may work together to prevent flashbacks and reverse gas flow) and may include an internal taper that serves as the sealing surface for an upstream hose. The retainer 244 provides attachment features to attach the inlet assembly to both the main body 100 and any upstream equipment (i.e., an upstream hose). In the depicted embodiments, the attachment features are threads configured to mate with corresponding threads on upstream equipment and the main body 100. Notably, in the depicted embodiments, the inlet assembly 240 attaches to the external surface 110 of the main body 100. As is described in further detail below, this external attachment (i.e., attaching the retainer 244 around the external surface 110 of the main body 100) allows the retainer 244 to act as a stop for the indicator assembly 180. However, in other embodiments, the inlet assembly 240 may include any desirable attachment features; and the stop functionality of the retainer 244 can be replaced or supplemented by a feature included on the main body 100. For example, the main body 100 may include a stop protrusion that extends radially outward from the outer surface 110 at the upstream end 102 of the main body 100.

Next, in the depicted embodiment, the outlet assembly 250 includes a swivel 252, a hose nut 254, and a swivel retainer 256. The swivel 252 retains the hose nut 254 and seals a mating taper of a torch (or other downstream equipment). Meanwhile, the swivel retainer 256 retains the swivel 252 and couples the outlet assembly 250 to the main body 100. In particular, the swivel retainer 256 threadably couples the outlet assembly 250 to the main body 100. The swivel retainer 256 also includes an o-ring 257 that seals against the main body 100. In fact, when the outlet assembly 250 is torqued down, the o-ring 257 may apply a load to a gasket 222 included at a downstream end of the safety element 220 to secure the flame arrestor 220 against an interior step or shoulder 145 (see FIGs. 4 and 8) defined within the interior cavity 125 of the main body 100.

Generally, the depicted inlet assembly 240 and outlet assembly 250 are designed for oxygen connections (i.e., the assemblies include right-hand threads). However, as mentioned, these are merely example inlet and outlet assemblies, and the assemblies can be swapped for (i.e., replaced with) assemblies compatible with fuel connections or assemblies necessary to mount the flashback arrestor 10 within a torch, regulator, etc. That being said, in any inlet or outlet assembly utilized with the flashback arrestor 10, surfaces forming a channel for gas should be gas tight to prevent a flame from traveling along an undesirable path (i.e., around the safety element 220).

Still referring to FIGs. 1-3, but now with reference to FIG. 4 as well, the internal mechanism 150 generally includes a filter guide 152 with a filter 176 and a filter guide biasing member 178. Meanwhile, the indicator assembly 180 generally includes a collar 182, a collar biasing member 196 and an indicator band 198. As will be explained in further detail below, the internal mechanism 150 is linked or connected to the indicator assembly 180 via the actuatable elements 200. However, as a brief summary, the actuatable elements 200, which in the depicted embodiment are three ball bearings (i.e., stainless steel ball bearings), lock the indicator assembly 180 until the internal mechanism 150 is actuated by backpressure acting against filter 176. When the backpressure created by diminished flow through filter 176 overcomes a pressure threshold, the filter guide 152 moves against and compresses the filter guide biasing member 178 (also referred to herein as spring 178).

After the filter guide 152 moves (i.e., slides) its full travel length, the actuatable elements 200 can move out of engagement with the indicator assembly 180 to unlock the indicator assembly 180. Prior to actuation of the internal mechanism 150, the collar 182 covers or hides the indicator band 198. By comparison, once the internal mechanism 150 is actuated and unlocks the indicator assembly 180, the collar 182 moves to expose the indicator band 198. Since the backpressure is generated when debris clogs the filter 176 and decreases the flow capacity of the flashback arrestor 10, in essence, the indicator assembly automatically provides an indication that the flow rate through the flashback arrestor 10 has decreased or diminished by a predetermined amount. However, notably, the indicator assembly 180 is not providing an indication of backpressure, but, instead, is providing an indication of diminished flow capacity. Moreover, actuation of the indicator assembly does not close the device 10. That is, the backpressure does not close off a flow path, but instead, actuates the indicator assembly to provide an indication of diminished flow capacity without closing the flow path.

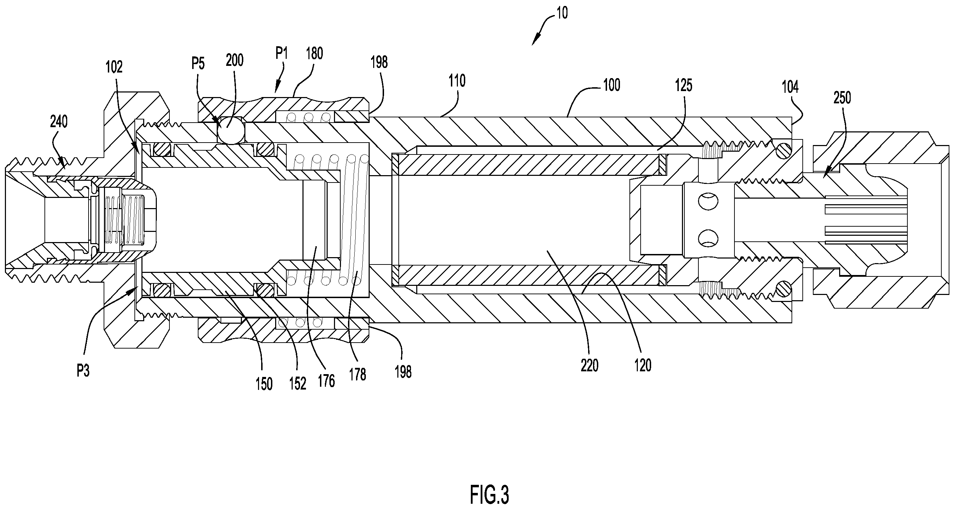

FIG. 4 shows a partially exploded view of the sectional view of FIG. 3. The partially exploded view illustrates the main body 100, the internal mechanism 150, and the indicator assembly 180, as well as the inlet assembly 240, outlet assembly 250, and safety element 220, in detail. The descriptions of the safety element 220, inlet assembly 240 and outlet assembly 250 included above were provided with reference to FIG. 4 (as well as FIG. 8) and, thus, the foregoing description of FIG. 4 focuses on the main body 100, the internal mechanism 150, and the indicator assembly 180, as well as the interplay of the actuatable elements 200 with these components.

First, as mentioned above, the main body includes an outer surface 110 and an inner surface 120 that defines an interior cavity 125. The outer or exterior surface 110 includes two portions: an upstream or first portion 112; and a downstream or second portion 114. The first portion 112 and second portion 114 may be formed integrally; however, the first portion 112 and the second portion 114 are separated and/or delineated by a shoulder 116.

Similarly, the interior cavity 125 includes a first or upstream chamber 130 and a second or downstream chamber 140 that meet at a shoulder or step 145. More specifically, the first chamber 130 extends for a length L1, from an upstream end 132, which is adjacent to the first end 102 of the main body 100, to a downstream end 134. Meanwhile, the second chamber 140 extends, from an upstream end 142 to a downstream end 144. The downstream end 144 of the second chamber 140 is adjacent to the second end 104 of the main body 100 and the upstream end 142 of the second chamber 140 is adjacent to and in fluid communication with the downstream end 134 of the first chamber 130. However, the downstream end 134 of the first chamber 130 has a first diameter D1 that is larger than a diameter D2 of the upstream end 142 of the second chamber 140. Consequently, the step 145 (i.e., a vertical wall) is formed at the downstream end 134 of the first chamber 130.

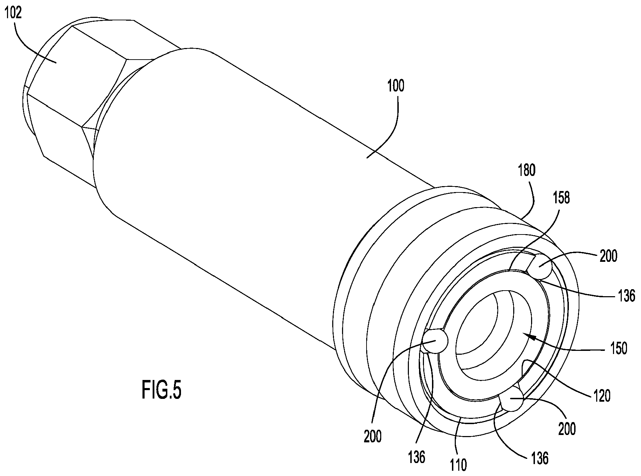

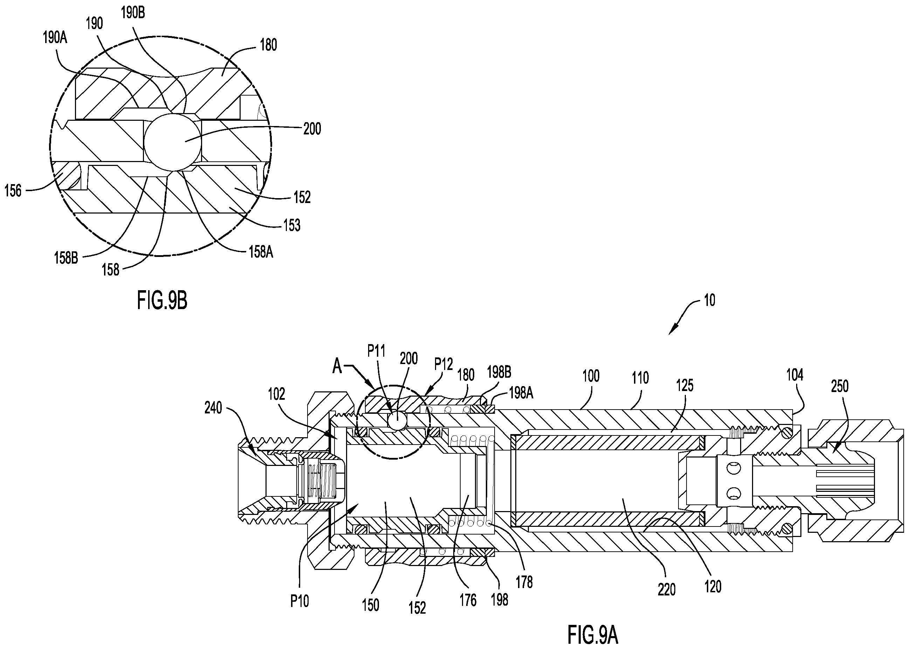

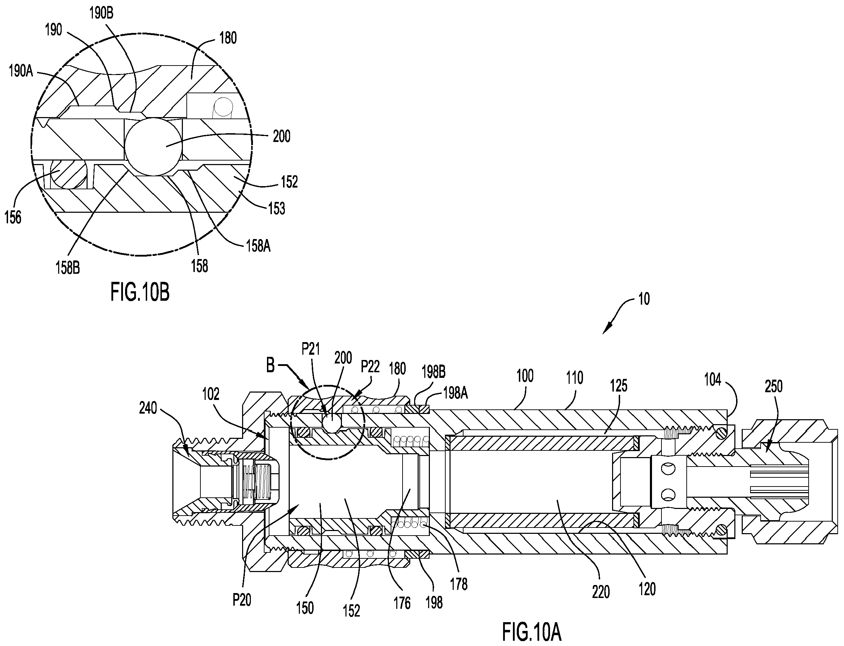

Still referring to FIG. 4, but now with reference to FIG. 5 as well, the first chamber 130 also includes a plurality of through holes 136 that are radially spaced around a circumference of the first chamber 130 (the circumference being between the upstream end 132 and the downstream end 134). Each hole 136 is configured to house one of the actuatable elements 200 and each of the holes 136 extends through the main body 100 (i.e., the holes 136 extend from the interior surface 120 to the exterior surface 110), as can be seen clearly in FIG. 5, so that the actuatable elements 200 can selectively engage the indicator assembly 180 and/or the internal mechanism 150. As is explained in further detail below, in many embodiments (i.e., the embodiments depicted in FIGs. 1-8), the actuatable elements 200 only engage (insofar as engage means that the actuatable elements are interacting with a groove included in a component to prevent movement of that component) the indicator assembly 180 or the internal mechanism 150 at any one time. However, and as is also explained in further detail below, in other embodiments, such as the embodiments shown in FIGs. 9A, 9B, 10A, and 10B, the actuatable elements may simultaneously engage both the indicator assembly 180 and the internal mechanism 150 under at least some conditions.

Still referring to FIGs. 4 and 5, in the depicted embodiment, the first chamber 130 includes three through holes 136 that are equally spaced around a single circumference (i.e., radially spaced at 120 degree intervals) and, thus, includes three corresponding actuatable elements 200. However, in other embodiments, the first chamber 130 may include two or more (i.e., two, four, five, etc.) holes 136 aligned around a single circumference of the first chamber 130, with any radial spacing and with corresponding actuatable elements 200. For example, at least some embodiments may include four holes 136 that are equally, radially spaced about a particular circumference of the interior cavity 130 (i.e., spaced 90 degrees from each other) and the apparatus 10 may include four actuatable elements 200 positioned within these holes 136. Aligning the holes 136 around a single circumference ensures that any and all actuating elements 200 can simultaneously move into or out of engagement with the indicator assembly 180 and/or the internal mechanism 150. Moreover, including three or more holes 136 (with three or more actuatable elements 200) may ensure that the internal mechanism 150 and collar assembly 180 are stably supported in coaxial alignment. That being said, the depicted embodiments may include three holes 136 (with three actuatable elements 200) because three actuatable elements 200 may provide sufficient stability and coaxial alignment without the added cost and complication of more holes 136 and actuatable elements 200.

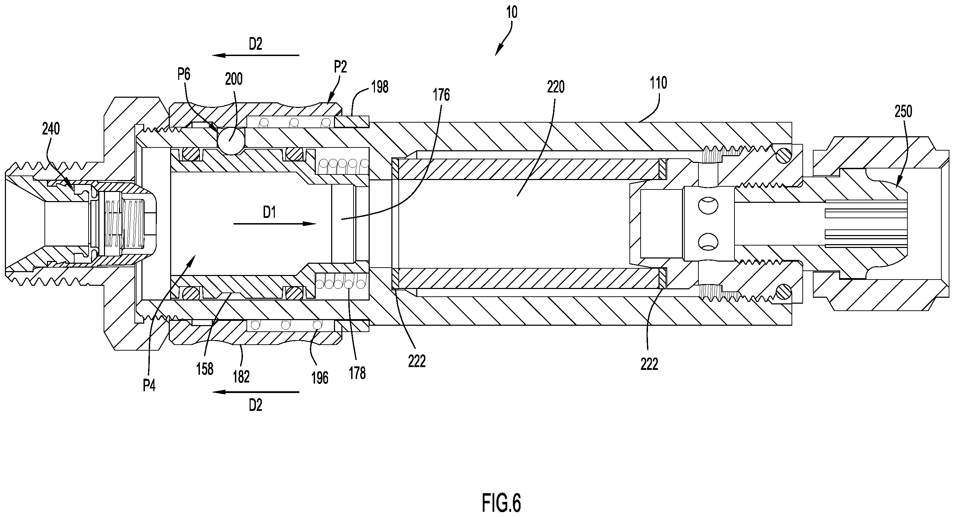

Now turning back to FIG.4, in the embodiment depicted in FIGs. 1-6, the internal mechanism 150 sits primarily within the first chamber 130. More specifically, the filter guide 152 has a main body 153 that sits within the first chamber 130 and the main body 153 has a length L2 that is shorter than the length L1 of the first chamber 130 (where L2 measures the body 153, not the combined length of the body 153 and the biasing member 178, which are collectively longer than the length L1 of the first chamber 130 so that the biasing member 178 can be compressed). Consequently, the filter guide 152 can travel (i.e., slide) within the first chamber 130. The main body 153 is also designed in such a way that it only allows flow through a disc filter 176 included at a downstream end 176 of its interior cavity 170. That is, the main body 153 does not allow gas to flow around the main body 153 and instead, defines a pathway (i.e., a gas flow path) that guides gas through the interior cavity 170 of the main body 153. The main body 153 also includes engagement face 159 is configured to engage with a biasing member 178 of the internal mechanism 150, as is explained in further detail below in connection with FIG. 6.

To create the flow path and also allow the sliding movement, the main body 153 includes an exterior surface 154 that is sized to slidably engage the interior surface 120 of the first chamber 130. In particular, the main body 153 includes an exterior surface 154 with an annular groove 158 that is disposed between two sealing o-rings 156. The annular groove 158 is sized to selectively receive, or at least partially receive, the actuatable elements 200 (e.g., ball bearings) and the o-rings 156 prevent gas from entering the annular groove 158 and/or from passing into or through an area or chamber within which the actuatable elements 200 move. Consequently, the o-rings 156 prevent a gas passing through the flashback arrestor 10 from flowing into the atmosphere (i.e., through holes 136) and prevent the gas from impacting operations of the actuatable elements 200.

Still further, the filter guide 152 includes an interior surface 160 that defines the interior cavity 170 of the filter guide 152. The interior cavity 170 of the filter guide 152 receives gas at its upstream end 172, either directly or indirectly, from the inlet assembly 240, depending on the position of the filter guide 152 (i.e., gas may pass directly from the inlet assembly 240 to the interior cavity 170 or may flow into the first chamber 130 therebetween, as is shown in FIG. 6). Gas that flows into the interior cavity 170 via the upstream end 172 flows towards the downstream end 174; however, importantly, the filter 176 is positioned at or proximate the downstream end 174 of the filter guide 152. Consequently, gas flows through the filter 176 before exiting the filter guide 152 at the downstream end 174 of the interior cavity 170.

In at least some embodiments, the filter 176 is a disc filter made of stainless steel, brass, and/or other suitable materials and includes a specific micron or porosity size that allows the filter 176 to collect debris that might normally clog filters included in the safety element 220, which should remain mostly clean to ensure that the safety element 220 can effectively extinguish a flame. That is, the filter 176 is configured so that gas can flow through the filter 176 to the safety element 220 with minimal debris. More specifically, the filter 176 may include a porosity size in the range of approximately 30 microns to approximately 100 microns (i.e., approximately 0.0016 inches to approximately 0.004 inches) and the safety element 220 may include a porosity size in the range of approximately 3 microns to approximately 7 microns (i.e., approximately 0.00011 inches to approximately 0.00027 inches). By comparison, silt typically measures in the range of approximately 0.00015 inches to approximately 0.0025 inches, with very fine sand typically measuring 0.0025 inches to 0.0049 inches. Consequently, the filter 176 may capture a majority of "larger" debris while the safety element 220 captures the remaining debris. Any debris referred to herein may include debris that enters the flashback arrestor 10 during normal use of gas, for example, due to dirt and trash building on regulators and inside of hoses and/or due to carbon soot building up when a flashback occurs.

Still referring to FIG. 4, the indicator band 198 of the indicator assembly 180 includes coloring or other visual indicia that provides an easily discernable visual indication to an end-user. For example, the indicator band may be bright or fluorescent red or yellow and may be contrast against mostly neutral or darker colors (i.e., darker greens, grays, blues, etc.) included in the remainder of the apparatus 10. As another example, the collar 182 may be a dark green collar and the remainder of the apparatus 10 may be a bronze or natural metal color. In fact, in some embodiments, the color of the indicator band 198 may be used to provide an indication of the type of gas being used with the device, perhaps in accordance with known indication colors. For example, a red indicator band 198 may be included in devices suitable for fuel equipment (i.e., devices including inlets and outlets with attachment features configured for fuel). Meanwhile, a green or blue indicator band 198 may be included in devices suitable for oxygen equipment (i.e., devices including inlets and outlets with attachment features configured for oxygen), with green indicator bands being included in devices sold or used in the Americas and blue indicator bands 198 being included in devices sold or used in European or Asian-Pacific regions. Regardless of the color, the visual indicia provided by the indicator band 198 indicates to the operator that the flashback arrestor 10 needs replacement or that there is low flow for the current application.

The collar 182 of the indicator assembly 180 extends from a first or upstream end 184 to a second or downstream end 186. As is shown in FIGs. 3 and 4, prior to actuation of the indicator assembly 180, the downstream end 186 covers or sits atop the indicator band 198 so that the indicator band 198 is initially covered or hidden and not visible to an end-user. More specifically, the collar 182 includes an interior surface 188 with an undercut section 192 adjacent to or at the downstream end 186 of the collar 182. The undercut section 192 includes a horizontal surface 194 and, before the collar 182 is actuated, the indicator band 198 is disposed underneath the horizontal surface 194 the undercut section 192. Meanwhile, a vertical surface 193 of the undercut section is configured to engage a collar biasing member 196 that is biased to move (i.e., slide) the collar 182 along the exterior surface 110 of the main body 100 when the indicator assembly 180 is actuated. The interior surface 188 also defines a collar groove 190 proximate the upstream end 184 of the collar 182. The collar groove 190 is configured to receive, or at least partially receive, the actuatable elements 200 (i.e., ball bearings 200) prior to actuation of the indicator assembly 180.

Now turning FIGs. 3 and 6, these Figures illustrate the flashback indicator 10 hiding and exposing the indicator band 198, respectively. That is, FIG. 3 illustrates the flashback arrestor 10 while the flashback arrestor 10 is not providing an indication of diminished flow capacity and FIG. 6 illustrates the flashback arrestor 10 while the flashback arrestor 10 is providing an indication of diminished flow capacity. In particular, in FIG. 3, the collar 182 of the indicator assembly 180 is in a non-indicating position P1 (also referred to as a first position P1), in which the collar 182 is disposed atop (and, thus, is covering or hiding) the indicator band 198 of the indicator assembly 180. When the flashback arrestor 10 has sufficient flow capacity, as is the case in FIG. 3, the internal mechanism 150 is in a first or non-actuated position P3 that secures the actuatable elements 200 in a locking position P5. The locking position P5 of the actuatable elements 200 locks the collar 182 in the non-indicating position P1.

That is, when the actuatable elements 200 (i.e., three ball bearings) are positioned in the locking position P5, the actuatable elements 200 engage the collar groove 190 of the collar 182 (i.e., rest at least partially within the collar groove 190). Meanwhile, the outer surface 154 of the filter guide 152 (of the internal mechanism 150) prevents the actuatable elements 200 from moving radially inwards, and, as such, the actuatable elements 200 are held in their locking position P5 until the flow capacity of the flashback arrestor 10 diminishes a predetermined amount. When the actuatable elements 200 are in the locking position P5, the actuatable elements 200 create sufficient resistance to prevent the collar biasing member 196 from expanding to or towards its natural or rest position and, thus, prevent the collar 182 from moving (i.e., from sliding) along the outer surface 110 of the main body 100 towards the first end 102 of the main body 100. Consequently, the collar 182 covers the indicator band 198 until the actuatable elements are moved out of the locking position P5.

As mentioned, during use, the filter 176 of the internal mechanism 150 will collect debris and, thus, begin to impinge the flow capacity of the flashback arrestor 10. As this debris collects on the filter 176 and impinges the flow capacity, backpressure will begin to build upstream of the filter 176. Initially, this backpressure may cause the filter guide 152 to oscillate or move a small amount in direction D1. However, once the filter 176 becomes overly clogged with debris or contaminants, the load created by the backpressure may overcome the biasing force of the biasing member 178 (by acting on the filter guide 152 via the main body 153 and the filter 176 itself) and begin to cause the filter guide 152 to axially travel within the first chamber 130, in direction D1, towards position P4. In the embodiments depicted in FIGs. 1-8, once the backpressure has generated a sufficient force against the filter 176, the filter guide 152 will axially travel its full travel distance in direction D1 so that engagement face 159 of the filter guide 152 moves into contact with or proximate to the step 145 included in the interior cavity 125 of the main body 100. However, in other embodiment, such as the embodiment depicted in FIGs. 9A, 9B, 10A, and 10B, the filter guide 152 will travel a first distance when the backpressure generates a first force and travel its full distance when the backpressure generates a second force, greater than the first.

Generally, the backpressure will generate a sufficient force when the flow capacity of the flashback arrestor has diminished a predetermined amount. Put another way, when the flow capacity of the flashback arrestor 10 has diminished or decreased a predetermined amount, backpressure acting on the filter guide 152 overcomes the spring force (exerted by spring 178 against engaging face 159) and axially moves the filter guide 152 a predetermined distance (i.e., its full travel distance). In at least one embodiment, the flow capacity of the flashback arrestor 10 has diminished or decreased a predetermined amount when a flow rate of gas exiting the exit assembly 250 has a flow rate that is lower than the flow rate of gas entering the main body 100 via inlet assembly 240 by a predetermined amount.

In the embodiment depicted in FIGs. 3 and 6, the backpressure acting on the filter guide 152 overcomes the full spring force (exerted by spring 178 against engaging face 159) and axially moves the filter guide 152 from its non-actuated position P3 (which may be any position prior to the actuated position P4 and not just the initial position of the filter guide 152) to its actuated position P4. In at least some embodiments, the filter 176 is sized in such a way that the filter guide 152 will not reach its full travel distance when there is only minimal restriction or pressure drop. That being said, in different embodiments, the filter 176 and spring 178 may be configured so that the internal mechanism actuates or triggers (i.e., moves from its non-actuated position P3 to its actuated position P4) at any particular flow rate/pressure over a wide range of flow rates or flows. That is, in different embodiments, the device can include different springs or different spring configurations that provide suitable indications for different operations (i.e., there may be one flow indicator configuration for high pressure operations and another flow indicator configuration for low pressure operations).

Still referring to FIGs. 3 and 6, as the filter guide 152 reaches its full travel distance (i.e., as the filter guide 152 reaches an actuated or second position P4), the annular groove 158 included around the exterior surface 154 of the filter guide 152 moves into alignment with the plurality of through holes 136 included in the main body 100. Consequently, when the filter guide is in its actuated position P4, the actuatable elements 200 can move out of engagement with the collar groove 190 included in the collar 182 of the indicator assembly 180 and into an unlocked position P6 in which the actuatable elements 200 engage the annular groove 158 of the internal mechanism 150. To facilitate this movement, the collar groove 190 may include tapered or chamfered lateral edges, or at least a chamfered or tapered trailing edge (trailing from the perspective of movement of the collar 182 past the actuatable element 200). Due, at least in part, to these chamfered or tapered lateral edges, the collar biasing member 196 only needs to exert a minimal force (i.e., spring force) against the collar 182 in a generally upstream direction to drive the actuatable elements 200 to their unlocked position P6 (when the internal mechanism 150 is in its actuated position P4).

Moreover, and still referring to FIGs. 3 and 6, since the actuatable elements 200 do not engage the collar 182 when in the unlocked positions P6, moving the actuatable elements 200 to unlocked positions P6 unlocks the indicating assembly 180 from non-indicating position P1. Consequently, the collar biasing member 196, which is compressed or pre-loaded prior to actuation of the internal mechanism 150, can move the collar 182 axially along the external surface 110 of the main body 100 when the actuatable elements move to their locked position P6. In particular, the collar biasing member 196 can move the collar 182, in direction D2, to an indicating or second position P2. When the collar 182 is in its indicating position P2, the collar 182 completely exposes or reveals the indicator band 198, which provides a clear visual indicator that the flashback indicator 10 has a diminished flow capacity and needs replacement or servicing. In the depicted embodiment, the collar biasing member 196 pushes the collar 182 along the external surface 110 of the main body 100 until the collar 182 comes into contact with the retainer 244. However, as mentioned, in other embodiments, the indicator assembly 180 or main body 100 may include any desirable features to control the travel distance of the collar 182, provided that the collar 182 can move to an indicating position P2 in which the indicator band 198 is sufficiently exposed.

When the collar 182 is in its indicating position P2 and the indicator band 198 is exposed, this often means that all of the filters included in the gas filtration device 10 need to be changed. Alternatively, an exposed indicator band 198 may indicate that the entire device 10 needs to be replaced. However, in some instances, it is possible for the device 10 to be triggered (i.e., the internal mechanism 150 has caused or allowed the collar 182 to move to its indicating position P2) from pressure shock. If the filter is replaced or the device 10 was triggered accidentally (i.e., from pressure shock) the collar 182 may be reset.

More specifically, in the depicted embodiment, the indicator assembly 180 can be reset (with or without changing a filter) by simply pulling the collar 182 back to the non-indicating position P1. Once the collar 182 has been reset to its non-indicating position P1, the biasing member 178 of the internal mechanism 150 will again be able to drive the internal mechanism back towards its non-actuated position P3 while driving the actuatable elements 220 back into their locked position P5. Notably, to effectuate this, the annular groove 158 of the internal mechanism 150 may also include tapered or chamfered lateral edges, or at least a chamfered or tapered trailing edge (trailing from the perspective of movement of the filter guide 152 past the actuatable element 200 while moving back to its non-actuated position P1). Due, at least in part, to these chamfered or tapered lateral edges, the filter guide biasing member 178 only needs to exert minimal force (i.e., spring force) against the filter guide 152 in a generally upstream direction to drive the actuatable elements 200 to their locked position P5 (as the internal mechanism 150 moves back to its non-actuated position P3).

That all being said, in other embodiments, the indicator assembly 180 and/or internal mechanism 150 may not be resettable. For example, the annular groove 158 included around the exterior surface 154 of the filter guide 152 and/or the collar groove 190 included on the interior surface 188 of the collar 182 may have lateral edges (or at least the trailing lateral edges of the grooves 158 and 190) that define hard angles (i.e., 90 degree angles) and prevent the actuatable elements from moving out of their unlocked position P6 subsequent to an actuation. These embodiments may prevent a user from accidentally resetting the indicator assembly 180 and may also provide a constant indication in case the initial indication of the indicator assembly 180 is missed or ignored. These embodiments may also prevent or discourage a user from using one device for high pressure and low pressure operations, which may be most effectively performed with different embodiments of the filtration device presented and described herein.

Now referring to FIGs. 7 and 8, these two Figures illustrate a side sectional view and exploded, side sectional view, respectively, of another embodiment of a flashback arrestor with a flow indicator. This embodiment is similar to the embodiment illustrated in FIGs. 1-6 (in fact at least the indicator assemblies 180 are identical) and, thus, is labeled with the same part numbers. However, this embodiment includes a main body 150 with a different internal cavity 175 so that the main body 100 can accommodate an internal mechanism 150 that incorporates the safety element 220. The inlet assembly 140 and outlet assembly 150 are also slightly different; however, for brevity, the variations included in these assemblies are not described as they are either variations in the shape of connectors or variations discussed above in connection with FIGs. 1-3 (i.e., the inlet and outlet assemblies may provide different connection features). Moreover, for brevity, only the differences between the embodiment shown in FIGs. 1-6 and the embodiment shown in FIGs. 7 and 8 are described below, and the description of any like features included herein is to be understood to apply to both embodiments.

That being said, in FIGs. 7 and 8, the internal cavity 125 of the main body 100 includes a two-step first chamber 130, so that the upstream end 132 of the first chamber has a diameter (unlabeled) that is different (i.e., larger) the diameter D1 of the downstream end 134. Meanwhile, the upstream end 142 of the second chamber 140 is substantially straight (as opposed to stepped like chamber 140 of FIGs. 1-6), but still includes a diameter D2 that is smaller than the diameter D1 of the downstream end 134 of the first chamber 130 so that the first chamber 130 and the second chamber 140 still meet at a shoulder or step 145. The downstream end 144 of the second chamber 140 still allows gas to flow into the exit assembly 150; however, now, the downstream end 144 includes a tapered or funneled channel to provide a different exit flow rate as compared to the second chamber 140 of the embodiment FIGs. 1-6.

The modified internal cavity 125 accommodates a modified internal mechanism 150, which now incorporates the safety element 220. More specifically, the internal mechanism 150 now includes a filter 176 that also serves as one of the gaskets 222 of the safety element 220. In other words, the internal mechanism 150 utilizes a unitary filter instead of the double filter arrangement (filter 176 + separate safety element /flash arrestor 220) utilized in the embodiment of FIGs. 1-6. In FIGs. 7 and 8, the annular groove 158 still extends around the external surface 154 of the main body 153 of the filter guide 152, between two o-rings 156; however, the travel distance of the filter guide 152 is defined by a length L4 that only extends over a part or segment of the length of the filter guide. The annular groove is included on the segment of the filter guide 152 included within length L4, and this segment is disposed within the first step of the first chamber 130, which has a length L3. Notably, the through holes 136 extend through the first step of the first chamber 130 and the segment has a length L3 that is shorter than length L4 so that the filter guide 152 can move or travel (i.e., slide) within the first chamber 130 to selectively align the annular groove 158 with the through holes 136.

Additionally, in the embodiment depicted in FIGs. 7 and 8, the engaging face 159 extends around the safety element 220 (as opposed to the filter guide 152). However, since the filter guide 152 and safety element 220 are coupled together and travel together, locating the engaging face 159 on the safety element 220 does not prevent the filter guide 152 (and safety element 220) from moving to an actuated position P4 that aligns the annular groove 156 with the plurality of holes 136 when backpressure creates a load sufficient to overcome the natural force (i.e., spring force) of the filter guide biasing member 178. That is, although the embodiment depicted in FIGs. 7 and 8 includes some reoriented components, this embodiment can operate in substantially the same manner as is described above in connection with FIGs. 3 and 6. For example, once the backpressure has generated a sufficient force against the filter 176/220, the filter guide 152 will move in direction D1 so that engagement face 159 of the filter guide 152 moves into contact with or proximate to the step 145 included in the interior cavity 125 of the main body 100. However, now, the flashback arrestor 10 will provide an indication when a filter 176 included in the safety element 220 is clogged, as opposed to an indication when a separate filter 176 upstream of the safety element 220 is clogged.

Now turning to FIGs. 9A, 9B, 10A, and 10B, these Figures illustrate side sectional and close-up views of another embodiment of a flashback arrestor with a flow indicator. FIGs. 9A and 9B illustrate the flashback arrestor when the flow capacity of the flashback arrestor has diminished by a first predetermined amount and FIGs. 10A and 10B illustrate the flashback arrestor when the flow capacity of the flashback arrestor has diminished by a second predetermined amount that is greater than the first predetermined amount. Overall, the embodiment shown in FIGs. 9A, 9B, 10A, and 10B has many similarities to the embodiments illustrated in FIGs. 1-8 (in fact, at least the main body 100, inlet 240, outlet 250, and safety element 220 are identical to their like components from the embodiment depicted in FIGs. 1-6). Consequently, FIGs. 9A, 9B, 10A, and 10B are labeled with the same part numbers and, for brevity, and only the differences between components from the embodiments shown in FIGs. 1-8 and the embodiment shown in FIGs. 9A, 9B, 10A, and 10B are described below. By comparison, the descriptions of components that are similar to the components shown and described in connection with FIGs. 1-8 are to be understood to apply to all of the embodiments including that feature.

Overall, the embodiment shown in FIGs. 9A, 9B, 10A, and 10B differs from the embodiments shown in FIGs. 1-8 in that the embodiment shown in FIGs. 9A, 9B, 10A, and 10B provides a multi-stage (i.e., a two-stage) actuation. To effectuate this, the filter guide 152 includes a modified annular groove 158 and the collar 190 includes a modified collar groove 190, insofar as these grooves are modified with respect to the like-numbered grooves included in the embodiments depicted in FIGs. 1-8. More specifically, and as is best seen in the close-up views provided by FIGs. 9B and 10B, the annular groove 158 includes a first portion 158A and a second portion 158B while the collar groove 190 includes a first portion 190A and a second portion 190B. The first portion 158A of the annular groove 158 and the second portion 190B of the collar groove 190 are grooves or depressions with a smaller depth than the second portion 158B and the first portion 190A, respectively. That is, the first portion 158A and the second portion 190B are sized so that an actuatable element 200 can engage both the first portion 158A of the annular groove 158 and the second portion 190B of the collar groove 190 simultaneously (with a small portion of each actuatable element 200 extending beyond its hole 136 on either end of the hole 136). By comparison, the second portion 158B of the annular groove 158 and the first portion 190A of the collar groove 190 are sized so that the actuatable elements 200 can engage the filter guide 152 or collar 182 without engaging the other component (i.e., a stainless steel ball 200 can engage the second portion 158B of groove 158 without engaging the collar groove 190).

These features allow the apparatus 10 to incrementally expose a first portion 198A and a second portion 198B of the indicator band 198. More specifically, as debris collects in filter 176, the flow capacity of the apparatus 10 diminishes and backpressure begins to cause the filter guide 152 to travel axially. Once the flow diminishes to a certain threshold (thereby creating backpressure above a first threshold), the filter guide 152 travels to a first or partially actuated position P10, as is shown in FIGs. 9A and 9B. In position P10, the first portion 158A of the annular groove 158 is in alignment with actuatable elements 200 (which are movably mounted within holes 136, as shown in FIG. 5). Consequently, the actuatable elements 200, which are disposed within the first portion 190A of the collar groove 190 prior to actuation of the filter guide 152, can move radially inwards, into the first portion 158A of the annular groove 158 included on the filter guide 152.

Due to the depth of the first portion 158A, the actuatable elements 200 only move inwards an incremental amount; however, the actuatable elements 200 move radially inwards enough to move into alignment with the second portion 190B of the collar groove 190. That is, the actuatable elements can move into partially unlocked positions P11 which allow the collar biasing member 196 (which, as discussed above, is compressed or pre-loaded prior to actuation of the internal mechanism 150) to move the collar 182 axially along the external surface 110 of the main body 100, to a partial indicating position P12. When the collar 182 is in the partial indicating position P12, the actuatable elements 200 are engaged with the first portion 158A of the annular groove 158 and the second portion 190B of the collar groove 190. Moreover, when the collar is in the partial indicating position P12, the first portion 198A of the indicator band 198 is exposed (i.e., not covered by the collar 182).

Then, as the flow capacity of the device 10 further diminishes (i.e., as the device 10 continues to become more clogged with debris), additional backpressure may act on the filter guide 152, moving the filter guide 152 its full travel distance, to position P20, as can be seen in FIG. 10A (filter guide 152 may reach position P20 when the flow rate diminishes a second predetermined amount causing the backpressure to exceed a second threshold). As can be seen in FIGs. 10A and 10B, when the filter guide 152 is in position P20, the second portion 158B of the annular groove 158 is in alignment with actuatable elements 200. Since the second portion 158B is deeper than the first portion 158A, the actuatable elements 200 can move further radially inwards and can move out of engagement with the collar groove 190 of the indicator assembly 180, into fully unlocked positions P21. This eliminates the resistive force created by the actuatable elements 200 against the collar 182 and, thus, allows the collar biasing member 196, which is still at least partially compressed when the collar 182 is in the partial indicating position P12 (see FIG. 9A), to move the collar 182 axially again, further along the external surface 110 of the main body 100, to full indicating position P22.

When the collar is in the full indicating position P22, the first portion 198A and the second portion 198B of the indicator band 198 are exposed (i.e., not covered by the collar 182). That is, the entire indicator band 198 (including both portion 198A and portion 198B) is exposed or revealed. Thus, the flashback arrestor 10 shown in FIGs. 9A, 9B, 10A, and 10B automatically, and incrementally, provides a first indication when the flow capacity of the main body diminishes by a first predetermined amount and automatically provides a second indication when the flow capacity of the main body diminishes by a second predetermined amount.

In some instances, the first portion 198A of the indicator band 198 may be an early warning indicator while the second portion 198B of the indicator band 198 may be a failure indicator. For example, the first portion 198A may be yellow (to provide a warning) and the second portion 198B may be red (to indicate an imminent failure). However, in other instances, the first portion 198A of the indicator band 198 may be an inadequate flow indicator for low-pressure operations and the second portion 198B may be an inadequate flow indicator for high-pressure operations. In yet other instances, the portions 198A and 198B may be portions of a uniform indicator band 198 and the incremental exposure may provide more granularity and detail about how the flow capacity has diminished (i.e., a wider exposure may indicate a more severe clog). Regardless of what the portions 198A, 198B indicate, each portion may be a separate piece or the portions may be segments of a single band (i.e., with different indicia, such as coloring, delineating each part).

In the embodiment depicted in FIGs. 9A, 9B, 10A, and 10B, portions 158A and 158B of the annular groove 158 are adjacent each other so that the portions 158A, 158B form a continuous groove 158. Similarly, portions 190A and 190B of the collar groove 190 are adjacent each other so that the portions 190A, 190B form a continuous groove 190. Moreover, each of the portions of the annular groove 158 and the collar groove 190 is defined by tapered walls (i.e., walls with a shallow or soft slope). As was discussed above in connection with the embodiments of FIGs. 1-8, due at least in part to these tapered walls, the apparatus may, in at least some instances, be resettable when the backpressure acting on the filter guide 152 dissipates. However, in other embodiments, the apparatus need not be resettable. For example, the grooves, and portions thereof, may include hard edges that prevent resetting, as discussed above in connection with the embodiments shown in FIGs. 1-8.

Additionally or alternatively, in other embodiments, the portions 158A, 158B of the annular groove 158 and/or the portions 190A, 190B of the collar groove 190 need not be continuous. Instead, the portions 158A, 158B of the annular groove 158 and/or the portions 190A, 190B of the collar groove 190 could be spaced apart from each other by a distance. Spacing may allow for a wider gap between the first indication (which indicates when the flow capacity of the main body diminishes by a first predetermined amount) and the second indication (which indicates when the flow capacity of the main body diminishes by a second predetermined amount). Still further, other embodiments may include additional stages of actuation (i.e., three, four, or more), effectuated by any combination of continuous or spaced apart groove portions.

Still referring to FIGs. 9A, 9B, 10A, and 10B, in some embodiments, the multi-stage actuation embodiment depicted in FIGs. 9A, 9B, 10A, and 10B may be reconfigured to provide a single-stage, automatically resettable embodiment. More specifically, the multi-stage (i.e., two-stage) actuation embodiment depicted in FIGs. 9A, 9B, 10A, and 10B may be configured so that the filter guide 152 travels its full travel distance, to position P20 (see FIG. 10A) to align the actuatable elements 200 with the first portion 158A of groove 158. Consequently, the filter guide 152 would need to move to position P20 before the actuatable elements 200 could move to partially unlocked positions P11 and before the collar 182 could move to the partial indicating position P12. Thus, by comparison with the previously described embodiments, full actuation of this embodiment would not move the actuatable elements 200 out of engagement with either groove 158 or collar groove 190. Consequently, upon dissipation of backpressure, the apparatus 10 might automatically reset (since the actuatable elements 200 can more easily traverse the soft or tapered walls between the groove portions).

In these automatically resetting embodiments, the actuatable elements 200 would not move to fully unlocked positions P21 and, thus, the collar 182 would not move beyond the partial indicating position P12 (i.e., the collar 182 would not move to full indicating position P22). Consequently, the indicator band 198 might only include a first portion 198A (that is, the indicator band 198 may be a single indicator band 198, like in the embodiments shown in FIGs. 1-8). That being said, in some embodiments, the band could be modified to include multiple portions within a smaller area. Moreover, in other embodiments, any device (i.e., the devices from the embodiments shown and described in connection with FIGs. 1-8) might be made to automatically reset by shortening and softening the walls defining a groove and/or adjusting the strength of the biasing members so that the internal mechanism 150 and indicator assembly 180 can automatically return to their original (i.e., non-indicated or non-actuated) positions.

The gas flow safety device with flow indication presented and described herein provides a number of advantages. Most notably, the gas flow safety device may automatically indicate that a gas flow safety device, such as a flashback arrestor, has a diminished flow capacity. If instead, an end-user attempts to replace or service at specific time intervals, the end-user may replace/service a gas flow safety device too late which may create safety issues or defects. Alternatively, the end-user may replace/service a gas flow safety device too soon which may be inefficient and costly. Consequently, the apparatus presented herein may be useful for any end-users performing cutting or welding operations.

To summarize, in one form, an apparatus is provided, comprising: a main body configured to direct a flow of gas from an inlet to an outlet, the main body having a flow capacity; a safety element for preventing flashbacks that is disposed within the main body; and an indicator assembly that automatically provides an indication when flow capacity of the main body diminishes by a predetermined amount.

In another form, an apparatus is provided comprising: main body configured to direct a flow of gas from an inlet to an outlet, the main body having a flow capacity; a safety element that prevents the flow of gas from reversing and that is disposed within the main body; and an internal mechanism that causes the apparatus to provide an indication when the flow capacity of the main body diminishes by a predetermined amount.

In yet another form, an indicator assembly for a gas flow safety device is provided comprising: an indicator band that is mounted around an external surface of the gas flow safety device; and a collar that is mounted around the external surface and selectively positionable over the indicator band, the collar being configured to hide the indicator band when the gas flow safety device is operating with a flow capacity above a predetermined threshold and expose the indicator band when the flow capacity is below the predetermined threshold.

Although the techniques are illustrated and described herein as embodied in one or more specific examples, the specific details of the examples are not intended to limit the scope of the techniques presented herein, since various modifications and structural changes may be made within the scope and range of the invention. For example, as mentioned, in some embodiments, the tapered or chamfered edges of the collar groove 190 and/or groove 158 may be removed to prevent the indicator assembly 180 from being reset. Additionally or alternatively, the inlet assembly 240 need not include a check valve and an apparatus with only a flame arrestor (i.e., safety element 220) might include the internal mechanism 150 and indicator assembly 180 to provide a filtration device with a flow indicator. As other alternatives, the device 10 might only include a check valve (i.e., check valve 242) and might not include a flame arrestor (i.e., safety element 220) or the device 10 might include neither a flame arrestor nor a check valve. Still further, as mentioned, the components described herein (i.e., the internal mechanism 150, actuatable elements 200, and indicator assembly 180) may be incorporated into any desirable gas flow safety device in order to provide flow indication for that gas flow safety device.

In addition, various features from one of the examples discussed herein may be incorporated into any other examples. Accordingly, the appended claims should be construed broadly and in a manner consistent with the scope of the disclosure.

## Claims

1. An apparatus, comprising:
a main body configured to direct a flow of gas from an inlet to an outlet, the main body having a flow capacity;
a safety element for preventing flashbacks that is disposed within the main body; and
an indicator assembly that automatically provides an indication when the flow capacity of the main body diminishes by a predetermined amount.

2. The apparatus of claim 1, wherein the indication is a visual indication.

3. The apparatus of claim 1 or 2, wherein the indicator assembly is disposed around and movable along an external surface of the main body.

4. The apparatus of any of the preceding claims, wherein the indicator assembly comprises:
an indicator band that provides the indication when uncovered; and
a collar that covers the indicator band until the flow capacity of the main body diminishes by the predetermined amount.

5. The apparatus of claim 4, wherein the collar is biased to an indicating position that uncovers the indicator band and the apparatus further comprises:
a plurality of actuatable elements, wherein the actuatable elements lock the collar in a non-indicating position that covers the indicator band until the flow capacity of the main body diminishes by the predetermined amount.

6. The apparatus of claim 5, further comprising:
an internal mechanism that moves into alignment with the plurality of actuatable elements to actuate the actuatable elements and unlock the collar when the flow capacity of the main body diminishes by the predetermined amount.

7. The apparatus of claim 6, wherein:
the actuatable elements are ball bearings; and
the internal mechanism is slidably mounted within the main body and slides from a first position to a second position to actuate the ball bearings, the ball bearings engaging the main body and the collar when the internal mechanism is in the first position and the ball bearings engaging the main body and the internal mechanism when the internal mechanism is in the second position.

8. The apparatus of claim 7, wherein the internal mechanism moves to the second position when backpressure acting on the internal mechanism creates a load that overcomes a force exerted by a biasing member acting on the internal mechanism.

9. The apparatus of any of claims 1-4, wherein the indicator assembly provides the indication by automatically moving from a non-indicating position to an indicating position.

10. The apparatus of claim 9, further comprising:
an internal mechanism that is movable between a non-actuated position and an actuated position; and
a plurality of actuatable elements that are movable between locked positions and unlocked positions, wherein upon diminishment of the flow capacity of the main body by the predetermined amount, the internal mechanism moves to the actuated position to allow the actuatable elements to move to the unlocked positions, and moving the actuatable elements to the unlocked positions allows the indicator assembly to move to the indicating position.

11. The apparatus of claim any of claims 1-4, wherein the indication is a first indication, the predetermined amount is a first predetermined amount and the indicator assembly further causes the apparatus to provide a second indication when the flow capacity of the main body diminishes by a second predetermined amount that is greater than the first predetermined amount.

12. The apparatus of claim 10, wherein the internal mechanism is slidably mounted within the main body and slides from the non-actuated position to the actuated position to move into alignment with the plurality of actuatable elements.

13. The apparatus of claim 12, wherein the internal mechanism moves to the actuated position when backpressure acting on the internal mechanism creates a load that overcomes a force exerted by a biasing member acting on the internal mechanism.

14. An indicator assembly for a gas flow safety device comprising:
an indicator band that is mounted around an external surface of the gas flow safety device; and
a collar that is mounted around the external surface and selectively positionable over the indicator band, the collar being configured to hide the indicator band when the gas flow safety device is operating with a flow capacity above a predetermined threshold and automatically expose the indicator band when the flow capacity is below the predetermined threshold.

15. The indicator assembly of claim 14, wherein the collar is a spring-loaded collar.
